(19) Europäisches Patentamt
European Patent Office
Office européen des brevets

(11) **EP 2 691 642 B1**

(12) **FASCICULE DE BREVET EUROPEEN**

(45) Date de publication et mention
de la délivrance du brevet:
**18.03.2015 Bulletin 2015/12**

(21) Numéro de dépôt: **12714745.2**

(22) Date de dépôt: **27.03.2012**

(51) Int Cl.:
*F03B 13/18* (2006.01)   *F03B 13/20* (2006.01)
*F03B 15/12* (2006.01)   *F03B 13/16* (2006.01)
*F03B 15/00* (2006.01)

(86) Numéro de dépôt international:
**PCT/FR2012/000107**

(87) Numéro de publication internationale:
**WO 2012/131186 (04.10.2012 Gazette 2012/40)**

(54) **PROCÉDÉ DE CONTRÔLE D'UN DISPOSITIF POUR CONVERTIR L'ÉNERGIE DES VAGUES EN ÉNERGIE ÉLECTRIQUE**

VERFAHREN ZUR STEUERUNG EINER VORRICHTUNG ZUR UMWANDLUNG VON WELLENENERGIE IN ELEKTRISCHE ENERGIE

METHOD FOR CONTROLLING A DEVICE FOR CONVERTING WAVE ENERGY INTO ELECTRICAL ENERGY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.03.2011 FR 1100924**

(43) Date de publication de la demande:
**05.02.2014 Bulletin 2014/06**

(73) Titulaire: **IFP Energies nouvelles**
**92852 Rueil-Malmaison Cedex (FR)**

(72) Inventeurs:
• **HENWOOD, Nicolas**
  **F-75013 Paris (FR)**
• **MALAIZE, Jérémy**
  **F-91700 Sainte Genevieve des Bois (FR)**
• **CHAUVIN, Jonathan**
  **F-75017 Paris (FR)**

(56) Documents cités:
**GB-A- 2 434 408**      **GB-A- 2 473 659**
**US-A- 4 134 023**      **US-A- 4 781 023**
**US-A1- 2003 001 392**  **US-A1- 2007 137 195**
**US-A1- 2010 320 759**

**Description**

L'invention concerne le domaine des dispositifs pour convertir l'énergie des vagues en énergie électrique.

Ces dispositifs, couramment appelés appareils "houlomoteurs", sont particulièrement intéressants, car ils permettent de produire de l'électricité à partir d'une source d'énergie renouvelable (l'énergie potentielle et cinétique des vagues) sans émission de gaz à effet de serre. Ils sont bien adaptés pour fournir de l'électricité à des sites insulaires isolés.

Les documents FR 2 876 751 et WO 2009/081042 décrivent des appareils pour capter l'énergie produite par le flot marin. Ces dispositifs sont composés d'un support flottant dans lequel est disposé un pendule monté mobile par rapport au support flottant. Le mouvement relatif du pendule par rapport au support flottant est utilisé pour produire de l'énergie électrique. Le document US 4 134 023 décrit aussi un appareil oscillatoire pour convertir l'énergie des vagues en énergie électrique.

L'invention propose d'améliorer le fonctionnement d'un appareil houlomoteur en estimant en temps réel les efforts exercés par la houle sur l'axe du pendule afin d'adopter en conséquence les meilleurs réglages des stratégies de récupération de l'énergie électrique.

De manière générale, l'invention décrit un procédé pour convertir l'énergie des vagues en énergie électrique avec un appareil comportant un moyen mobile qui coopère avec un moteur électrique, le moyen mobile effectuant un mouvement oscillatoire par rapport au moteur sous l'action des vagues. Selon l'invention, on effectue les étapes suivantes :

a) on choisit une loi qui exprime la position du moyen mobile en fonction de la force exercée par le moteur sur le moyen mobile et en fonction de la force des vagues appliquée au moyen mobile,

b) on actionne le moteur pour produire une force donnée sur le moyen mobile, puis

c) on mesure la position du moyen mobile par rapport au moteur au cours du temps,

d) on détermine ladite force des vagues en utilisant ladite loi choisie à l'étape a) et en tenant compte de ladite force du moteur donnée à l'étape b) et de la position du moyen mobile mesurée à l'étape c), puis

e) on détermine une nouvelle valeur de la force exercée par le moteur sur le moyen mobile, ladite nouvelle valeur correspondant à une force qui maximise la puissance électrique moyenne récupérée par le moteur, la puissance électrique moyenne étant fonction de ladite force des vagues déterminées à l'étape d), de ladite nouvelle valeur de la force exercée par le moteur sur le moyen mobile et de la position du moyen mobile par rapport au moteur, et

f) on actionne le moteur pour produire la nouvelle valeur de la force déterminée à l'étape e) en fournissant de l'énergie électrique au moteur lorsque la force du moteur entraîne le moyen mobile et en récupérant de l'énergie électrique sur le moteur lorsque la force du moteur résiste au mouvement du moyen mobile.

Selon l'invention, la loi choisie à l'étape a) peut exprimer l'égalité entre la somme des forces appliquées au moyen mobile et le produit de la masse du moyen mobile par l'accélération du moyen mobile.

Selon l'invention :

- on peut choisir un premier modèle qui exprime la force exercée par le moteur sur le moyen mobile en fonction du temps,
- on peut choisir un deuxième modèle qui exprime la force des vagues appliquée au moyen mobile en fonction du temps,
- à l'étape b), on peut fixer des valeurs aux paramètres du premier modèle et on peut actionner le moteur pour produire une force donnée par le premier modèle avec les valeurs des paramètres fixées,
- à l'étape d), on peut déterminer les paramètres du deuxième modèle,
- à l'étape e), on peut déterminer les paramètres du premier modèle,
- à l'étape f), on peut actionner le moteur pour produire une force donnée par le premier modèle avec les paramètres déterminés à l'étape e).

Le deuxième modèle peut être une somme de fonctions sinusoïdales.

A l'étape a), on peut choisir la loi : $J\ddot{x} + \mu\dot{x} + kx = \sum_{i=1}^{P} D_i \sin(\omega_i t + \varphi_i) + C$

on peut choisir le premier modèle: $C = K_x x + K_v \dot{x}$

on peut choisir le deuxième modèle: $\sum_{i=1}^{P} D_i \sin(\omega_i t + \varphi_i)$

dans lesquels :

x étant la position du moyen mobile par rapport au moteur,
J étant l'inertie du moyen mobile,
k étant la force de rappel due à la gravité terrestre,
$\mu$ étant un terme modélisant les frottements visqueux du moyen mobile,
C étant la force exercée par le moteur sur le moyen mobile,
Kx et Kv étant des paramètres,
P étant un nombre entier,
Di étant une amplitude, $\omega_i$ étant une fréquence et $\varphi_i$ étant une phase.

Avant l'étape a), on peut déterminer les valeurs termes J, k et $\mu$.

A l'étape a), on peut choisir le nombre P compris entre 10 et 100, et on peut choisir les fréquences $\omega_i$ comprises entre 0 et 2 Hz.

A l'étape e), on peut déterminer la nouvelle valeur de la force du moteur qui permet de maximiser la puissance électrique moyenne récupérée par le moteur pour une fréquence $\omega_i$ à laquelle correspond la plus grande amplitude Di.

A l'étape e), on peut déterminer la nouvelle valeur de la force du moteur qui permet de maximiser la puissance électrique moyenne récupérée par le moteur pour toute les fréquences $\omega_i$.

Après l'étape f), on peut répéter les étapes c, d, e, et f.

A l'étape b), ladite force donnée peut être choisie par l'utilisateur.

On peut effectuer l'étape c) pendant au moins 30 secondes.

D'autres caractéristiques et avantages de l'invention seront mieux compris et apparaîtront clairement à la lecture de la description faite ci-après en se référant aux dessins parmi lesquels :

- les figures 1 et 2 représentent des appareils houlomoteur qui peuvent être pilotés par le procédé de contrôle selon l'invention,
- la figure 3 représente un exemple de diagramme du procédé, selon l'invention de contrôle d'un appareil houlomoteur,
- les figures 4 à 6 représentent l'évolution de l'estimation des efforts créés par la houle,
- les figures 7 et 8 représentent les paramètres de commande du moteur, déterminés par le procédé selon l'invention.

Un appareil "houlomoteur" mis en oeuvre selon la présente invention comporte un élément mobile actionnant une machine électrique La houle met en mouvement l'élément mobile par rapport à la machine électrique. La machine électrique fonctionne alternativement en mode génératrice d'électricité pour récupérer l'énergie de la houle et en mode moteur pour actionner le mobile.

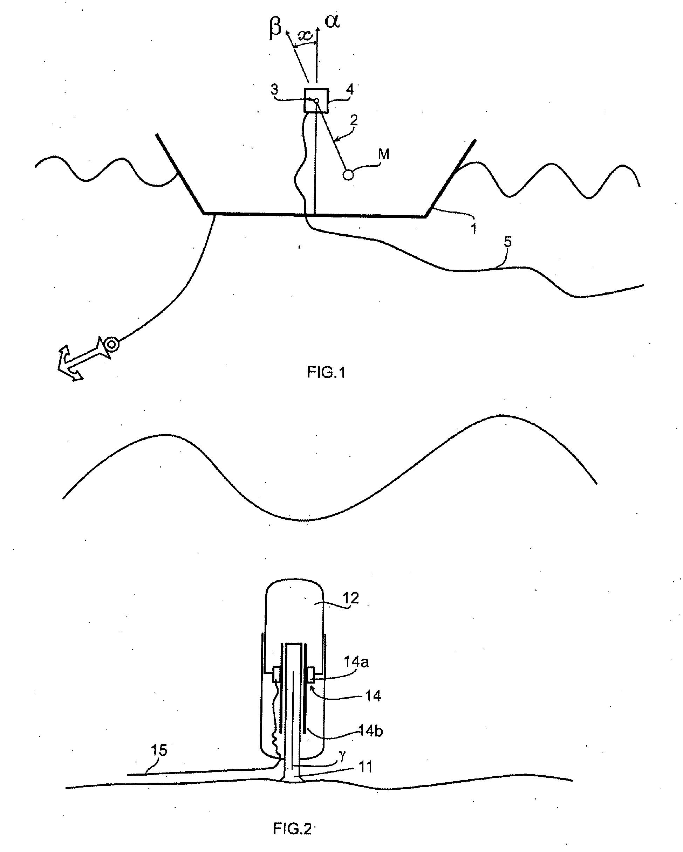

Selon un premier mode de réalisation présenté sur la figure 1, l'appareil "houlomoteur" pour convertir l'énergie des vagues en énergie électrique est composée d'un élément flotteur 1 sur lequel est disposé un élément mobile constitué d'un pendule 2. L'élément flotteur est destiné à flotter en mer. Le pendule 2 est monté mobile en rotation autour d'un axe fixe 3 par rapport à l'élément flotteur 1. Sur la figure 1, le pendule 2 est formé d'une tige munie à une de ses extrémités d'une masse M. La tige constitue le bras de levier de la masse M en rotation autour de l'axe 3. Les mouvements du pendule actionnent un arbre d'axe 3. Alternativement, le pendule 2 peut être composé d'une roue d'axe 3 dont le centre de gravité est distinct de l'axe 3.

L'appareil "houlomoteur" comporte un dispositif de récupération d'énergie 4 qui récupère l'énergie sur l'arbre d'axe 3. Le dispositif 4 est une machine électrique génératrice d'électricité. La machine électrique est également utilisée comme moteur pour actionner le pendule. L'arbre de la machine électrique 4 peut être directement relié à l'arbre actionné par le pendule. La machine électrique 4 peut également être reliée au pendule par l'intermédiaire d'un système de transmission de mouvement avec démultiplication de la vitesse de rotation, par exemple par un ensemble d'engrenages.

L'export d'électricité et l'alimentation électrique de la machine électrique 4 sont effectués par un câble 5 qui relie le flotteur 1 au réseau électrique installé à terre.

Lors du fonctionnement de l'appareil "houlomoteur", l'élément flotteur 1 est mis en mouvement par l'action des vagues, tandis que le pendule tend à rester dans une position verticale du fait de la masse M. Vu de l'élément flotteur 1, le pendule 2 est actionné en mouvement par rapport à l'élément flotteur 1 sous l'action des vagues sur l'élément flotteur 1. Les mouvements de rotation du pendule 2 actionnent l'arbre d'axe 3 qui entraîne le générateur électrique 4.

Le mouvement du pendule 2 peut être repéré par sa position angulaire x par rapport à l'élément flotteur 1. L'angle x peut être mesuré entre une direction a liée à l'élément flotteur et la direction $\beta$ de la tige du pendule 2. La direction $\alpha$ peut correspondre à la direction de la tige du pendule 2 lorsque le pendule 2 est au repos et que l'élément flotteur 1 est à l'équilibre sur une mer calme.

Selon un deuxième mode de réalisation présenté sur la figure 2, l'appareil "houlomoteur" pour convertir l'énergie des vagues en énergie électrique est composée d'une tige 11 ancrée sur le fond marin et d'un élément mobile constitué d'un flotteur 12. Le flotteur 12 étant mobile en translation sur la tige 11.

L'appareil "houlomoteur" comporte un dispositif de récupération d'énergie 14 qui récupère l'énergie produite par les mouvements du flotteur 12. La machine 14 est un moteur linéaire qui peut fonctionner alternativement en génératrice d'électricité et en moteur pour actionner le flotteur 12 par rapport à la tige 11. Le moteur 14 est composé d'un ou plusieurs patins 14a, par exemple une bobine, et de la rampe 14b, par exemple composée d'une succession d'aimants disposés le long de la tige 11.

L'export d'électricité et l'alimentation électrique de la machine électrique 4 sont effectués par un câble 15 qui relie le flotteur 12 au réseau électrique installé à terre.

Lors du fonctionnement de l'appareil "houlomoteur", l'élément flotteur 12 est mis en mouvement par l'action des vagues, tandis que la tige 11 ancrée au sol reste fixe. Le flotteur 12 décrit successivement et alternativement des mouvements ascendants et descendants le long de la tige 11. Le mouvement de translation du flotteur 12 entraîne la machine électrique 14a par rapport à 14b pour produire de l'électricité.

Le mouvement du mobile 12 peut être repéré par sa position x qui peut être mesurée par exemple par la distance du patin 14a par rapport à une position de référence γ fixe sur la tige 11.

Selon l'étape a) du procédé selon l'invention on choisit une loi qui exprime la position du mobile en fonction de la force exercée par le moteur sur le mobile et en fonction de la force des vagues appliquées au mobile. Selon la loi d'équilibre du mobile en mouvement oscillatoire, par exemple le pendule 2 au niveau de l'axe 3 de rotation ou le flotteur 12 au niveau de la tige 11, la somme des forces extérieures appliquées au mobile est égale au produit de la masse du mobile par l'accélération à son centre d'inertie. En l'occurrence, les forces appliquées au mobile sont la force ou couple appliqué par le moteur sur le mobile, l'action des vagues sur le mobile, les frottements que subit le mobile et la force de gravitée terrestre. La loi d'équilibre du mobile en mouvement peut-être modélisée par l'équation suivante :

$$J\ddot{x} + \mu\dot{x} + kx = \sum_{i=1}^{P} D_i \sin(\omega_i t + \varphi_i) + C \qquad (1)$$

où x représente la position du mobile (l'angle ou la distance par rapport à une référence), $\dot{x}$ représente la dérivé première de la fonction x par rapport au temps (c'est-à-dire la vitesse du mobile), $\ddot{x}$ représente la dérivé seconde de la fonction x par rapport au temps (c'est-à-dire l'accélération du mobile),

J représente l'inertie du mobile, par exemple du pendule 2 rapportée à l'axe 3 ou le flotteur 12 par rapport à la tige 11, k la force de rappel, due à la force de gravité terrestre, à une position d'équilibre due à la masse M du pendule 2 ou due à la masse M du flotteur 12,

μ un terme modélisant les frottements visqueux du pendule 2 ou du flotteur 12,

C est le couple fourni par le moteur 4 ou la force fournie par le moteur 14, que l'on peut commander.

$\sum_{i=1}^{P} D_i \sin(\omega_i t + \varphi_i)$ correspond au modèle qui représente l'effort créé par la houle sur le mobile et rapporté à l'axe du moteur 4 où à la tige 11. On suppose qu'il s'agit d'une somme de P termes oscillants, chaque terme i étant caractérisé par une amplitude $D_i$, une fréquence $\omega_i$ et une phase $\varphi_i$. D'autre modèle peuvent être utilisés dans le procédé selon l'invention. Le modèle qui correspond à une somme de fonction sinusoïdale (c'est-à-dire un modèle de la forme $\sum_{i=1}^{P} D_i \sin(\omega_i t + \varphi_i)$) permet d'utiliser le contenu spectrale des efforts créer par la houle pour optimiser l'énergie électrique récupérée.

On peut écrire l'équation (1) sous une forme différente, mais équivalente, qui est plus facile à manipuler. Pour chaque pulsation $\omega_i$, on appelle $z_i$ le vecteur suivant :

$$z_i = \begin{pmatrix} z_{i,1} \\ z_{i,2} \end{pmatrix} \begin{pmatrix} D_i \sin(\omega_i t + \varphi_i) \\ D_i \omega_i \cos(\omega_i t + \varphi_i) \end{pmatrix}.$$

Si l'on calcule la dérivée du vecteur zi par rapport au temps, on montre que $\dot{z}_i = \underbrace{\begin{pmatrix} 0 & 1 \\ -\omega_i^2 & 0 \end{pmatrix}}_{\Omega_i} z_i$ et l'on

appelle $\Omega i$ la matrice 2x2 apparaissant dans
l'équation précédente. Si l'on rassemble tous les vecteurs zi dans un vecteur de dimension 2xP appelé z, on obtient que la dérivée de ce vecteur z par rapport au temps répond à l'équation suivante : $\dot{z} = \underbrace{\begin{pmatrix} Q_1 & 0 & \cdots & & 0 \\ 0 & \ddots & \ddots & & \vdots \\ \vdots & \ddots & Q_{P-1} & & 0 \\ 0 & \cdots & 0 & & Q_P \end{pmatrix}}_{\Omega} z$

où la matrice $\Omega$ intervenant dans cette équation
est une matrice diagonale par blocs, dont les blocs diagonaux sont constitués des matrices Qi. Au final, la somme pour i allant de 1 à P dans l'équation (1) est égale à la somme pour i allant de 1 à P de la première composante du vecteur z, lequel admet une représentation différentielle donnée par la précédente équation. De façon plus précise, on obtient que :

$$\sum_{i=1}^{P} D_i \sin(\omega_i t + \varphi_i) = \underbrace{\begin{pmatrix} 1 & 0 & \cdots & \cdots & 1 & 0 \end{pmatrix}}_{\Sigma} z .$$

Au final, on appelle X le vecteur constitué de $x$, $\dot{x}$ et de z. La représentation d'état de l'équation (1) est la suivante :

$$\dot{X} = \underbrace{\begin{pmatrix} 0 & 1 & 0 \\ -k/J & -\mu/J & \Sigma \\ 0 & 0 & \Omega \end{pmatrix}}_{A} X + \underbrace{\begin{pmatrix} 0 \\ 1/J \\ 0 \end{pmatrix}}_{B} C \qquad (1')$$

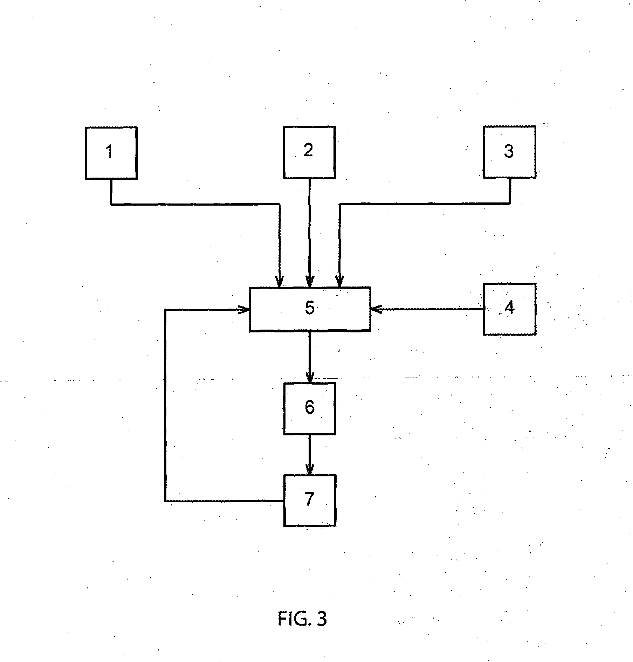

Selon l'invention, on met en oeuvre le procédé de contrôle décrit ci-après en référence à la figure 3.
Selon l'invention on estime en temps réel lé spectre du couple exercé par la houle sur l'axe 3 du pendule 2 ou de la force exercée par la houle sur le flotteur 12, c'est à dire que l'on détermine les P valeurs d'amplitude Di, et de phase $\varphi$i de l'équation 1, en effectuant les opérations suivantes.

Opération 1 :

Les termes J, k et $\mu$ dépendent de la constitution physique et sont des paramètres intrinsèques de l'appareil "houlomoteur" mis en oeuvre.
On détermine les termes J, k et $\mu$ qui permettent de modéliser le mouvement oscillatoire du mobile.
On peut déterminer les termes J, k et $\mu$ de manière théorique ou par expérimentation. Par exemple, on peut déterminer les termes J, k et $\mu$ par calcul en tenant compte de la constitution physique de l'appareil "houlomoteur". Alternativement, on dispose l'appareil "houlomoteur" dans des conditions sans houle et sans action du moteur, on déplace le mobile par rapport à sa position d'équilibre et on mesure la position au cours du temps. On détermine les valeurs J, k et $\mu$ au moyen de l'équation $J\ddot{x} + \mu\dot{x} + kx = 0$ qui exprime l'équilibre du mobile.

Opération 2 :

On choisit une valeur de P et les valeurs des fréquences ωi. On peut choisir le nombre entier P compris entre 10 et 100. Les inventeurs ont observé que pour modéliser les efforts créer par la houle, on peut choisir les valeurs de ωi dans les basses fréquences, par exemple dans l'intervalle compris entre 0 et 2 Hz, de référence entre 0 et 0,5 Hz. Les valeurs des ωi peuvent être régulièrement réparties sur l'intervalle choisi.

Par exemple, on choisit P=20 et les valeurs 20 de ωi étant choisies dans l'intervalle 0 à 0,5 Hz. Dans ce cas

$$\omega i = i \times \frac{0,5}{20}$$ en faisant varier i dans les nombres entiers de 0 à 20.

Si on choisit P=80 et les valeurs 80 de ωi étant choisies dans l'intervalle 0 à 2 Hz. Dans ce cas $\omega i = i \times \frac{2}{80}$ en faisant varier i dans les nombres entiers de 0 à 80.

Opération 3 :

L'opération 3 correspond à l'étape b) du procédé selon l'invention : on actionne le moteur pour qu'il produise une force donnée et connue sur le mobile.

On actionne le moteur électrique pour imposer un couple ou une force au mobile, par exemple un couple au pendule 2 ou une force au flotteur 12. Le couple ou force C peut être décrit par le modèle suivant :

$$C = K_x x + K_v \dot{x} \qquad\qquad (2)$$

dans lequel Kx et Kv sont des paramètres. Compte tenu du fait que C est une fonction qui dépend de la position et de la vitesse du mobile oscillant, le couple appliqué par le moteur est également oscillant. En appliquant le couple C dans l'équation (1) (ou dans l'équation (1')), on peut modifier la fréquence propre et l'amortissement naturel de l'ensemble constitué par l'élément mobile 2 ou 12 et la machine électrique 4 ou 14.

Initialement, on peut choisir une force ou couple C nul (Kx=0 et Kv=0).

x et x étant oscillant, la force ou couple C présente également un caractère oscillant.

On peut également déterminer des valeurs initiales de Kx et Kv à partir d'une connaissance théorique de la houle et en mettant en oeuvre l'opération 6 décrite ci-après.

Opération 4 :

L'opération 4 correspond à l'étape c) du procédé selon l'invention. On mesure la position x du mobile en temps réel au moyen de capteurs. La mesure de la position peut être effectuée pendant une durée de temps minimale, par exemple au moins 1 minute, de préférence au moins 30 secondes.

Le capteur peut être un capteur optique incrémental composé d'une source lumineuse d'un capteur détectant un flux de lumière, et d'une roue perforée cas du dispositif de la figure 1, ou d'une règle perforée ou gravée dans le cas du dispositif de la figure 2.

Opération 5 :

L'opération 5 correspond à l'étape d) du procédé selon l'invention : on détermine l'effort créer par la houle sur le mobile. En particulier, on peut déterminer l'effort créé par la houle sur le mobile en déterminant les P valeurs d'amplitude Di et de phase φi de l'équation 1 en utilisant :

- les termes J, K et μ, déterminés à l'opération 1
- une valeur de P et les valeurs des ωi, choisies à l'opération 2
- la valeur du couple ou force C appliqué par le moteur 4 ou 14 à l'opération 3
- l'angle x mesuré à l'opération 4.

Cette opération 5 est réalisée à l'aide d'un observateur qui est compatible avec le fonctionnement temps réel. L'observateur s'apparente à un banc de filtres agissant sur la position mesurée pour en extraire les phases et les amplitudes de l'excitation due à la houle.

En pratique, on appelle $\hat{X}$ le vecteur contenant les estimations de la position, de la vitesse et des composantes sinusoïdales zi introduites précédemment pour obtenir l'équation (1'). Pour calculer ces estimations, il faut réaliser les calculs suivants :

$$\frac{d\hat{X}}{dt} = A\hat{X} + BC - K(\hat{x} - x),$$ où $\hat{x}$ est la première composante du vecteur $\hat{X}$, et où x est la mesure de position.

Les calculs précédents sont construits à partir des paramètres (J, K, μ) et des P valeurs de ωi. Pour calculer $\hat{X}$, il est également nécessaire d'injecter dans les calculs la mesure de position x, et le couple ou la force exercé C.

Il est possible de résoudre l'équation précédente en ligne, ce qui permet d'obtenir le vecteur $\hat{X}$ qui contient toutes les informations nécessaires. On peut extraire les informations de phase φi et d'amplitude Di du vecteur $\hat{X}$ avec :

$$Di = F_D(i, \hat{X}) = \sqrt{\hat{z}_{i,1}^2 + \left(\frac{\hat{z}_{i,2}}{\omega_i}\right)^2}$$

$$\varphi i = F_\varphi(i, \hat{X}) = a\tan\left(\frac{\omega_i \hat{z}_{i,1}}{\hat{z}_{i,2}}\right)$$

où les fonctions $F_D$ et $F_\varphi$ réalisent des opérations élémentaires (additions, multiplications et fonctions trigonométriques) à partir de certaines composantes de $\hat{X}$. Par construction de la fonction F, on est assuré que l'on obtient ainsi les valeurs exactes des amplitudes et des phases.

Cette phase est très différente d'autres méthodes présentées dans la littérature. On cherche en effet à estimer le contenu fréquentiel de l'excitation due à la houle. Les méthodes répandues dans la littérature s'attachent à prédire l'excitation de la houle sur un horizon de temps futur, alors que notre méthode s'appuie uniquement sur des mesures déjà acquises pour décrire la houle comme une somme de fonctions sinusoïdales et ainsi remonter au contenu spectral des efforts créés par la houle.

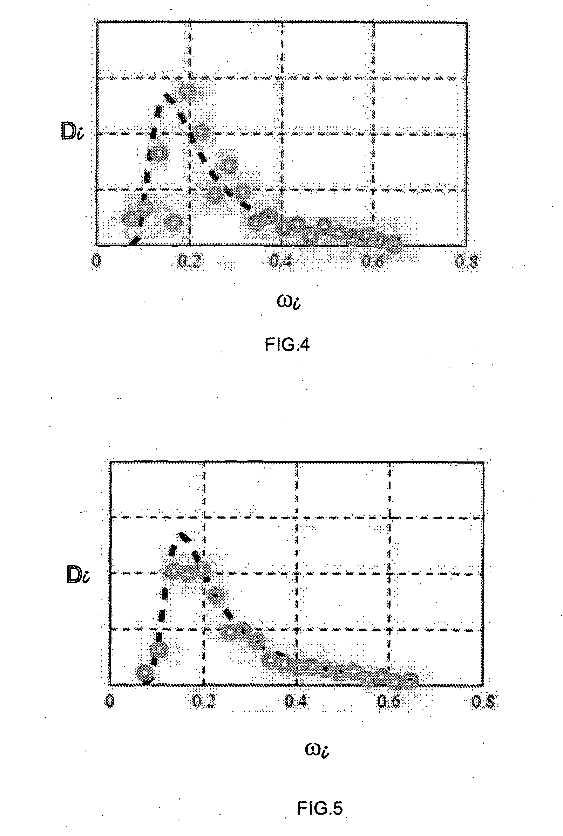

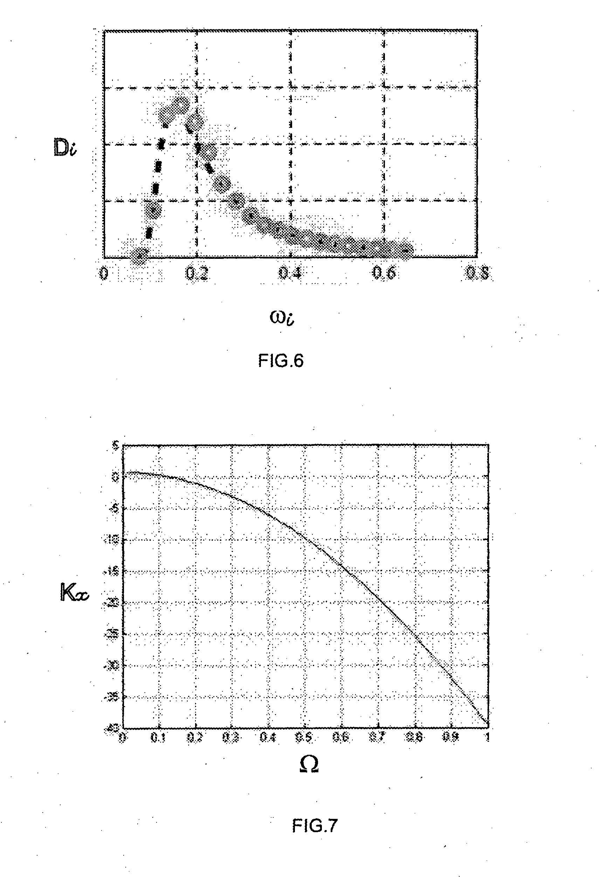

On peut tracer l'évolution du spectre ainsi reconstruit au cours du temps. En effet, comme le montre l'équation utilisée pour calculer $\hat{X}$, $\hat{X}$ est obtenu en résolvant une équation différentiel, il existe donc une certaine dynamique dans l'estimation des amplitudes et des phases. En pratique, il faut un certain temps, qu'il est possible de choisir, pour que les valeurs estimées des phases et des amplitudes convergent exactement vers les valeurs liées à la houle. Les figures 4, 5 et 6 montrent l'amplitude Di en fonction de la fréquence ωi respectivement au temps t1, au temps t2>t1 et au temps t3>t2. L'observation de la figure 4 à t1, de la figure 5 à t2, puis de la figure 6 à t3 montre que les amplitudes estimées Di, représentées par des cercles, convergent vers les valeurs exactes, représentées en pointillé, au cours du temps.

Opération 6 :

L'opération 6 correspond à l'étape e) du procédé selon l'invention : on détermine une nouvelle valeur de la force exercée par le moteur sur le mobile, la nouvelle valeur permettant de maximiser la puissance électrique moyenne récupérée par le moteur.

Selon l'invention, on utilise l'estimation du spectre de la force des vagues pour piloter l'appareil "houlomoteur" en modifiant l'action de la machine électrique 4 ou 14 pour placer l'oscillation du pendule 2 ou du flotteur 12 en résonnance avec les vagues.

Connaissant à ce stade les fréquences contenues dans la houle, ainsi que le niveau d'énergie porté par chacune d'elles, on peut calculer une nouvelle valeur du couple ou de la force C, c'est-à-dire de nouvelles valeurs de Kx et Kv. La nouvelle valeur du couple ou de la force C est déterminée pour modifier la fréquence propre et l'amortissement naturel de l'ensemble constitué par l'élément mobile 2 ou 12 et la machine électrique 4 ou 14 en fonction du spectre de la houle (c'est-à-dire les valeurs de phase (pi et d'amplitude Di), déterminé à l'opération 5 afin de maximiser la puissance électrique moyenne récupérée par le moteur.

Méthode 1 : on détermine la fréquence Ω pic de la houle. La fréquence de résonance Ω correspond à la valeur de ωi associée à la plus grande valeur d'amplitude Di. on détermine de nouvelles valeurs des paramètres Kx et Kv en négligeant les autres composantes fréquentielles, et en cherchant à maximiser la puissance moyenne récupérée à la fréquence Ω. Pour l'exemple particulier de l'équation (1), cela revient pratiquement à choisir Kv = -μ et Kx = k - JΩ.

Méthode 2: La seconde méthode consiste à prendre en compte la totalité des fréquences contenues dans le spectre fournies par l'opération 5. On cherche les paramètres Kx et Kv pour que la puissance moyenne récupérée soit maximale, en prenant en compte toutes les fréquences ωi. En pratique, on calcule la puissance moyenne électrique par l'équation suivante, qui est la moyenne de la puissance électrique instantanée sur une période de temps T, la valeur de T tendant vers l'infini, la puissance électrique instantanée étant donnée par le produit du couple ou de la force C par le régime du moteur (c'est-à-dire la vitesse de rotation ou vitesse linéaire du moteur) :

$$P_{elec} = \lim_{T \to \infty} \frac{1}{T} \int_0^T - C(t)\dot{x}(t)dt = \lim_{T \to \infty} \frac{1}{T} \int_0^T - (K_x x + K_v \dot{x})\dot{x}(t)dt$$ . A l'aide de cette équation, on voit clairement que la puissance électrique moyenne récupérée est une fonction des paramètres Kx, et Kv, mais aussi des paramètres Di, ωi puisque la vitesse $\dot{x}$ dont l'évolution est donnée par (1) dépend de façon évidente de l'excitation de la houle. Au final, on cherche à trouver les paramètres optimaux qui permettent de maximiser la puissance électrique récupérée, c'est-à-dire que l'on cherche à résoudre, par exemple par calcul numérique, le problème d'optimisation suivant :

$$\max_{(Kx,Kv)} \left(P_{elec}(Kx, Kv, Di, \omega i, J, k, \mu)\right)$$

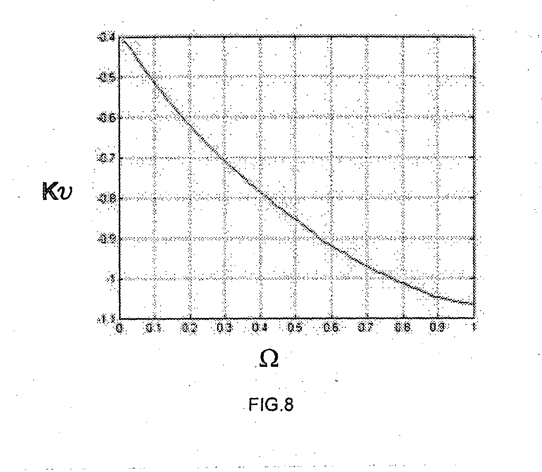

où Pelec est la puissance électrique moyenne produite à partir de la houle, et de ses composantes fréquentielles en ωi. En procédant de la sorte, pour l'exemple de la figure (1), Kx et Kv sont obtenus en lisant dans les tables représentées aux figures 7 et 8, et où Kx et Kv sont donnés en fonction de Ω mais obtenus en prenant en compte tout le spectre des efforts créés par la houle.

Opération 7 :

L'opération 7 correspond à l'étape f) du procédé selon l'invention : on actionne le moteur pour qu'il reproduise la nouvelle valeur de la force telle que déterminée à l'opération 6.

On détermine la nouvelle expression du couple ou de la force C du moteur 4 ou 14 avec les paramètres Kx et Kv déterminés à l'opération 6. Bien que les paramètres Kx et Kv soient conservés constants jusqu'à la prochaine itération du processus, le couple ou la force C dépend de la position et de la vitesse du mobile, par conséquent sa valeur évolue de manière oscillante au cours du temps.

On applique au moteur 4 ou 14 la nouvelle expression du couple ou force C. Le contrôle du moteur pour qu'il applique un couple ou force C au mobile est effectué en modifiant la tension électrique appliquée au moteur. De manière plus détaillée, pour fournir un couple ou force C qui entraîne le mobile, on applique une tension en fournissant une puissance électrique. Par contre, pour produire un couple ou force C qui résiste au mouvement du mobile, on applique une tension en récupérant une puissance électrique.

Tout au long de la phase d'exploitation de l'appareil houlo-moteur, l'état de la mer est grandement susceptible d'évoluer (variation de la période pic de la houle, déformation du spectre...). De plus, l'appareil houlo-moteur peut lui même s'avérer sensible au vieillissement et son comportement par rapport à la sollicitation des vagues peut varier au cours du temps.

Pour tenir compte de ces variations, selon l'invention on peut répéter les opérations 4 à 7.

Par exemple, on effectue les opérations 4 et 5 en continu. Dès qu'une valeur de Di, varie au-delà d'un seuil par rapport aux premières valeurs de Di qui ont été déterminées, par exemple dès qu'une valeur Di varie de plus de 5%, on effectue les opérations 6 et 7.

Alternativement, on effectue les opérations 4 et 5 à intervalle régulier dans le temps pendant une durée déterminée, par exemple une fois par jour, ou toutes les semaines, pendant 1 heure. Puis on effectue les opérations 6 et 7.

**Revendications**

1.  Procédé pour convertir l'énergie des vagues en énergie électrique avec un appareil comportant un moyen mobile qui coopère avec un moteur électrique, le moyen mobile effectuant un mouvement oscillatoire par rapport au moteur sous l'action des vagues, dans lequel on effectue les étapes suivantes :

a) on choisit une loi qui exprime la position du moyen mobile en fonction de la force exercée par le moteur sur le moyen mobile et en fonction de la force des vagues appliquée au moyen mobile,
b) on actionne le moteur pour produire une force donnée sur le moyen mobile, puis
c) on mesure la position du moyen mobile par rapport au moteur au cours du temps,
d) on détermine ladite force des vagues en utilisant ladite loi choisie à l'étape a) et en tenant compte de ladite force du moteur donnée à l'étape b) et de la position du moyen mobile mesurée à l'étape c), puis
e) on détermine une nouvelle valeur de la force exercée par le moteur sur le moyen mobile, ladite nouvelle valeur correspondant à une force qui maximise la puissance électrique moyenne récupérée par le moteur, la puissance électrique moyenne étant fonction de ladite force des vagues déterminées à l'étape d), de ladite nouvelle valeur de la force exercée par le moteur sur le moyen mobile et de la position du moyen mobile par rapport au moteur, et
f) on actionne le moteur pour produire la nouvelle valeur de la force déterminée à l'étape e) en fournissant de l'énergie électrique au moteur lorsque la force du moteur entraîne le moyen mobile et en récupérant de l'énergie électrique sur le moteur lorsque la force du moteur résiste au mouvement du moyen mobile.

2.  Procédé selon la revendication 1, dans lequel la loi choisie à l'étape a) exprime l'égalité entre la somme des forces appliquées au moyen mobile et le produit de la masse du moyen mobile par l'accélération du moyen mobile.

3.  Procédé selon la revendication 2, dans lequel

    - on choisit un premier modèle qui exprime la force exercée par le moteur sur le moyen mobile en fonction du temps,
    - on choisit un deuxième modèle qui exprime la force des vagues appliquée au moyen mobile en fonction du temps,
    - à l'étape b), on fixe des valeurs aux paramètres du premier modèle et on actionne le moteur pour produire une force donnée par le premier modèle avec les valeurs des paramètres fixées,
    - à l'étape d), on détermine les paramètres du deuxième modèle,
    - à l'étape e), on détermine les paramètres du premier modèle,
    - à l'étape f), on actionne le moteur pour produire une force donnée par le premier modèle avec les paramètres déterminés à l'étape e).

4.  Procédé selon la revendication 3, dans lequel le deuxième modèle est une somme de fonctions sinusoïdales.

5.  Procédé selon la revendication 4, dans lequel,

    à l'étape a) on choisit la loi : $J\ddot{x} + \mu\dot{x} + kx = \sum_{i=1}^{P} D_i \sin(\omega_i t + \varphi_i) + C$

    on choisit le premier modèle : $C = K_x x + K_v \dot{x}$

    on choisit le deuxième modèle : $\sum_{i=1}^{P} D_i \sin(\omega_i t + \varphi_i)$

    dans lesquels :

    x étant la position du moyen mobile par rapport au moteur,
    J étant l'inertie du moyen mobile,
    k étant la force de rappel due à la gravité terrestre,
    $\mu$ étant un terme modélisant les frottements visqueux du moyen mobile,
    C étant la force exercée par le moteur sur le moyen mobile,
    Kx et Kv étant des paramètres,
    P étant un nombre entier,
    Di étant une amplitude, $\omega_i$ étant une fréquence et $\varphi_i$ étant une phase.

6.  Procédé selon la revendication 5, dans lequel avant l'étape a), on détermine les valeurs termes J, k et $\mu$.

7.  Procédé selon l'une des revendications 5 et 6, dans lequel, à l'étape a), on choisit le nombre P compris entre 10 et 100, et on choisit les fréquences $\omega_i$ comprises entre 0 et 2 Hz.

8. Procédé selon l'une des revendications 5 à 7, dans lequel à l'étape e), on détermine la nouvelle valeur de la force du moteur qui permet de maximiser la puissance électrique moyenne récupérée par le moteur pour une fréquence $\omega i$ à laquelle correspond la plus grande amplitude Di.

9. Procédé selon l'une des revendications 5 à 7, dans lequel, à l'étape e), on détermine la nouvelle valeur de la force du moteur qui permet de maximiser la puissance électrique moyenne récupérée par le moteur pour toute les fréquences $\omega i$.

10. Procédé selon l'une des revendications précédentes, dans lequel, après l'étape f), on répète les étapes c, d, e, et f.

11. Procédé selon l'une des revendications précédentes, dans lequel, à l'étape b), ladite force donnée est choisie par l'utilisateur.

12. Procédé selon l'une des revendications précédentes, dans lequel on effectue l'étape c) pendant au moins 30 secondes.


**Patentansprüche**

1. Verfahren zum Umwandeln der Energie von Wellen in elektrische Energie mit einem Gerät, umfassend ein bewegliches Mittel, das mit einem Elektromotor zusammenwirkt, wobei das bewegliche Mittel eine Schwingungsbewegung in Bezug zum Motor unter der Wirkung der Wellen ausführt, bei dem die folgenden Schritte durchgeführt werden:

   a) Auswahl eines Gesetzes, das die Position des beweglichen Mittels in Abhängigkeit von der vom Motor auf das bewegliche Mittel ausgeübten Kraft und in Abhängigkeit von der Kraft der Wellen, die auf das bewegliche Mittel ausgeübt wird, ausdrückt,
   b) Betätigung des Motors, um eine gegebene Kraft auf das bewegliche Mittel zu erzeugen, dann
   c) Messen der Position des beweglichen Mittels in Bezug zum Motor im Laufe der Zeit,
   d) Bestimmung der Kraft der Wellen unter Verwendung des in Schritt a) gewählten Gesetzes und unter Berücksichtigung der Kraft des Motors, die in Schritt b) angegeben ist, und der Position des beweglichen Mittels, die in Schritt c) gemessen wurde, dann
   e) Bestimmung eines neuen Werts der vom Motor auf das bewegliche Mittel ausgeübten Kraft, wobei der neue Wert einer Kraft entspricht, die die durchschnittliche, vom Motor wiedergewonnene elektrische Leistung maximiert, wobei die durchschnittliche elektrische Leistung von der Kraft der in Schritt d) bestimmten Wellen, dem neuen Wert der vom Motor auf das bewegliche Mittel ausgeübten Kraft und von der Position des beweglichen Mittels in Bezug zum Motor abhängt, und
   f) Betätigung des Motors, um den neuen Wert der in Schritt e) bestimmten Kraft zu erzeugen, wobei elektrische Energie an den Motor geliefert wird, wenn die Kraft des Motors das bewegliche Mittel mitnimmt, und wobei elektrische Energie am Motor wiedergewonnen wird, wenn die Kraft des Motors der Bewegung des beweglichen Elements widersteht.

2. Verfahren nach Anspruch 1, bei dem das in Schritt a) gewählte Gesetz die Gleichheit zwischen der Summe der auf das bewegliche Element ausgeübten Kräfte und dem Produkt der Masse des beweglichen Mittels mal der Beschleunigung des beweglichen Mittels ausdrückt.

3. Verfahren nach Anspruch 2, bei dem

   - ein erstes Modell gewählt wird, das die vom Motor auf das bewegliche Mittel ausgeübte Kraft in Abhängigkeit von der Zeit ausdrückt,
   - ein zweites Modell gewählt wird, das die Kraft der Wellen, die auf das bewegliche Mittel in Abhängigkeit von der Zeit ausgeübt wird, ausdrückt,
   - in Schritt b) Werte für die Parameter des ersten Modells bestimmt werden, und der Motor betätigt wird, um eine durch das erste Modell gegebene Kraft mit den bestimmten Werten der Parameter zu erzeugen,
   - in Schritt d) die Parameter des zweiten Modells bestimmt werden,
   - in Schritt e) die Parameter des ersten Modells bestimmt werden,
   - in Schritt f) der Motor betätigt wird, um eine durch das erste Modell gegebene Kraft mit den in Schritt e) bestimmten Parametern zu erzeugen.

**4.** Verfahren nach Anspruch 3, bei dem das zweite Modell eine Summe von Sinusfunktionen ist.

**5.** Verfahren nach Anspruch 4, bei dem
in Schritt a) das folgende Gesetz gewählt wird:

$$J_{\dot{x}} + \mu_{\dot{x}} + k_x = \sum_{i=1}^{P} D_i \ sin(\omega_i t + \varphi_i) + C$$

das erste Modell gewählt wird:

$$C = K_x x + K_v \dot{x}$$

das zweite Modell gewählt wird:

$$\sum_{i=1}^{P} D_i \ sin(\omega_i t + \varphi_i)$$

wobei:

x die Position des beweglichen Mittels in Bezug zum Motor ist,
J die Trägheit des beweglichen Mittels ist,
k die Rückstellkraft auf Grund der Schwerkraft ist,
μ ein Terminus ist, der die viskosen Reibungen des beweglichen Mittels modelliert,
C die vom Motor auf das bewegliche Mittel ausgeübte Kraft ist,
Kx und Kv Parameter sind,
P eine ganze Zahl ist,
Di eine Amplitude ist, wobei ωi eine Frequenz und φi eine Phase ist.

**6.** Verfahren nach Anspruch 5, bei dem vor dem Schritt a) die Werte der Terme J, k und μ bestimmt werden.

**7.** Verfahren nach einem der Ansprüche 5 und 6, bei dem in Schritt a) die Zahl P zwischen 10 und 100 gewählt wird, und die Frequenzen ωi zwischen 0 und 2 Hz gewählt werden.

**8.** Verfahren nach einem der Ansprüche 5 bis 7, bei dem in Schritt e) der neue Wert der Kraft des Motors bestimmt wird, der es ermöglicht, die durchschnittliche, vom Motor wiedergewonnene durchschnittliche elektrische Leistung für eine Frequenz ωi, der die größte Amplitude Di entspricht, zu maximieren.

**9.** Verfahren nach einem der Ansprüche 5 bis 7, bei dem in Schritt e) der neue Wert der Kraft des Motors bestimmt wird, der es ermöglicht, die vom Motor wiedergewonnene durchschnittliche elektrische Leistung für alle Frequenzen ωi zu maximieren.

**10.** Verfahren nach einem der vorhergehenden Ansprüche, bei dem nach dem Schritt f) die Schritte c, d, e und f wiederholt werden.

**11.** Verfahren nach einem der vorhergehenden Ansprüche, bei dem in Schritt b) die gegebene Kraft vom Benutzer gewählt wird.

**12.** Verfahren nach einem der vorhergehenden Ansprüche, bei dem der Schritt c) während mindestens 30 Sekunden ausgeführt wird.

**Claims**

1. A method of converting wave energy to electrical energy using a device comprising a moving means that cooperates with an electric motor, the moving means having an oscillating motion with respect to the motor under the action of the waves, wherein the following stages are carried out:

   a) selecting a law that expresses the position of the moving means as a function of the force exerted by the motor on the moving means and as a function of the wave force applied onto the moving means,
   b) actuating the motor in order to produce a given force on the moving means, then
   c) measuring the position of the moving means with respect to the motor over time,
   d) determining said wave force using said law selected in stage a) and by taking account of said force of the motor given in stage b) and of the position of the moving means measured in stage c), then
   e) determining a new value for the force exerted by the motor on the moving means, said new value corresponding to a force that maximizes the average electric power recovered by the motor, the average electric power being a function of said wave force determined in stage d), of said new value of the force exerted by the motor on the moving means and of the position of the moving means with respect to the motor, and
   f) actuating the motor in order to produce the new value of the force determined in stage e) by supplying electrical energy to the motor when the force of the motor drives the moving means and by recovering electrical energy from the motor when the force of the motor resists the motion of the moving means.

2. A method as claimed in claim 1, wherein the law selected in stage a) expresses the equality between the sum of the forces applied to the moving means and the product of the mass of the moving means by the acceleration of the moving means.

3. A method as claimed in claim 2, comprising:

   - selecting a first model expressing the force exerted by the motor on the moving means as a function of time,
   - selecting a second model expressing the wave force applied to the moving means as a function of time,
   - in stage b), setting values for the parameters of the first model and actuating the motor in order to produce a force given by the first model with the set parameter values,
   - in stage d), determining the parameters of the second model,
   - in stage e), determining the parameters of the first model,
   - in stage f), actuating the motor in order to produce a force given by the first model with the parameters determined in stage e).

4. A method as claimed in claim 3, wherein the second model is a sum of sinusoidal functions.

5. A method as claimed in claim 4, comprising:

   in stage a), selecting the law: $J\ddot{x} + \mu\dot{x} + kx = \sum_{i=1}^{P} D_i \sin(\omega_i t + \varphi_i) + C$

   selecting the first model: $C = K_x x + K_v \dot{x}$

   selecting the second model: $\sum_{i=1}^{P} D_i \sin(\omega_i t + \varphi_i)$

   wherein:

   x is the position of the moving means with respect to the motor,
   J is the inertia of the moving means,
   k is the restoring force due to the earth's gravity,
   $\mu$ is a term modelling the viscous frictions of the moving means,
   C is the force exerted by the motor on the moving means,
   Kx and Kv are parameters,
   P is an integer,

Di is an amplitude, $\omega_i$ is a frequency and $\varphi_i$ is a phase.

6. A method as claimed in claim 5 wherein, prior to stage a), term values J, k and $\mu$ are determined.

7. A method as claimed in any one of claims 5 and 6 wherein, in stage a), number P is selected ranging between 10 and 100, and frequencies $\omega_i$ are selected ranging between 0 and 2 Hz.

8. A method as claimed in any one of claims 5 to 7 wherein, in stage e), the new value of the motor force allowing the average electric power recovered by the motor to be maximized is determined for a frequency $\omega_i$ the greatest amplitude Di corresponds to.

9. A method as claimed in any one of claims 5 to 7 wherein, in stage e), the new value of the motor force allowing the average electric power recovered by the motor to be maximized is determined for all the frequencies cos.

10. A method as claimed in any one of the previous claims wherein, after stage f), stages c, d, e and f are repeated.

11. A method as claimed in any one of the previous claims wherein, in stage b), said given force is selected by the user.

12. A method as claimed in any one of the previous claims, wherein stage c) is carried out for at least 30 seconds.

FIG.1

FIG.2

FIG. 3

FIG.4

FIG.5

FIG.6

FIG.7

FIG.8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2876751
- WO 2009081042 A

- US 4134023 A